# EUROPEAN PATENT APPLICATION

(11) **EP 4 579 317 A1**
(43) Date of publication of application: **02.07.2025**
(21) Application number: 24221040.9
(22) Date of filing: 18.12.2024
(51) Int. Cl.: G02B 27/48, G02B 5/02

(54) **SYSTEM AND METHOD OF REDUCING LASER SPECKLES**

(30) Priority: 28.12.2023 US 202318398583
(71) Applicant: Lightspace Group, Inc., Sunnyvale, CA 94085 (US)
(72) Inventor: Osmanis, Ilmars, 2167 Marupes novads (LV); Ozols, Ainars, 2150 Siguldas novads (LV); Osmanis, Kriss, 2107 Babites novads (LV); Gertners, Ugis, 2166 Marupes novads (LV); Zabels, Roberts, 1084 Riga (LV)
(74) Representative: Moosedog Oy

(57) **Abstract**

Disclosed is system (100) of reducing laser speckle contrast, the system comprises a laser light source (102) arranged to emit laser light; an illumination target (104) arranged to receive the emitted laser light; a speckle reducer (106) on an optical path between the laser light source and the illumination target, the speckle reducer comprising one or more optical diffuser elements (300) comprising a polymer free cholesteric liquid crystal medium (118, 302); a voltage source (114, 604, 606) connected to the one or more optical diffuser elements; and a controller (116, 608) operatively connected to the laser light source and the voltage source, wherein the controller is operable to apply and remove a driving voltage (Vd) to the one or more optical diffuser elements to toggle the one or more optical diffuser elements between a diffusing state and a non-diffusing state.

## Description

### TECHNICAL FIELD

The present disclosure relates to systems for reducing laser speckles. Moreover, the present disclosure relates to methods for reducing laser speckles.

### BACKGROUND

Lasers, and specifically solid-state diode lasers are sources of highly monochromatic light with already pre-collimated beams. In this regard, the laser finds application in metrology, imaging illumination as well as high-brightness wide color-gamut image projection. The lasers are coherent light sources, when such a beam is transmitted through or reflected from optical surfaces (for example lenses, prisms, mirrors, and so forth) a laser-speckle pattern is observed. The laser speckle is a distribution of random high-brightness and low-brightness illumination regions that is the opposite of uniform illumination. In multiple cases, laser speckle is an unwanted phenomenon that degrades illumination quality (by introducing light intensity "noise") and thus image quality as well.

In metrology and imaging, laser speckles can introduce artifacts that interfere with the resolution and/or measurement accuracy, whereas in image projection, if no mitigation measures are taken the perceived image is "grainy" and unpleasant to many viewers. Conventionally, multiple statistically independent speckle patterns can be superimposed either simultaneously or time-sequentially which will leverage integration over time.

Existing methods employ rotating ground glass diffusers in the time-sequential domain. Alternatively, high frequency oscillating reflective diffuser can be used for similar endeavour. However, both of these methods involve utilization of mechanical components, which introduced mechanical complexity, take up space and increase weight. While some existing methods can tolerate this approach, others cannot - specifically micro projection units are ill-suited for bulky mechanical solutions. There exists some methods that employs an oscillating mirror that can be implemented as a mems device which can reach reasonably small footprint. However, the reflective mode of operation might introduce additional optical path length negatively impacting overall footprint.

Therefore, in light of the foregoing discussion, there exists a need to overcome the aforementioned drawbacks.

### SUMMARY

The aim of the present disclosure is to provide a system and a method to reduce laser speckles. The aim of the present disclosure is achieved by a system and a method for reducing laser speckles as defined in the appended independent claims to which reference is made to. Advantageous features are set out in the appended dependent claims.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 is an illustration of a system of reducing laser speckle contrast, in accordance with an embodiment of the present disclosure;
FIG. 2A is an illustration of a representation of laser speckles on images, in accordance with an embodiment of the present disclosure;
FIG. 2B is an illustration of a representation of laser speckles pattern contrast reduction, in accordance with an embodiment of the present disclosure;
FIG. 3 is an illustration of an optical diffuser element in a diffusing state and a non-diffusing state, in accordance with an embodiment of the present disclosure;
FIG. 4A is an illustration of a graphical representation of a switching cycle of an optical diffuser element, in accordance with an embodiment of the present disclosure;
FIG. 4B is an illustration of a graphical representation of a difference in direct optical transparency (or light transmission) between Hₛₜₐₜₑ and FCₛₜₐₜₑ, in accordance with an embodiment of the present disclosure;
FIG. 5 is an illustration of a graphical representation of a change of diffusion angle as a function of cell gap, in accordance with an embodiment of the present disclosure;
FIG. 6 is an illustration of an arrangement of two stacked optical diffuser elements for reducing laser speckle contrast, in accordance with an embodiment of the present disclosure;
FIG. 7A is an illustration of a simulated oscillogram of optical response of an optical diffuser element, in accordance with an embodiment of the present disclosure;
FIG. 7B is an illustration of a simulated oscillogram of optical response of two optical diffuser elements driven with different frequencies, in accordance with an embodiment of the present disclosure; and
FIG. 8 is an illustration of a flowchart depicting steps of a method of of reducing laser speckle contrast, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a system of reducing laser speckle contrast, the system comprising:
- a laser light source arranged to emit laser light;
- an illumination target arranged to receive the emitted laser light;
- a speckle reducer on an optical path between the laser light source and the illumination target, the speckle reducer comprising
   - one or more optical diffuser elements comprising a polymer free cholesteric liquid crystal medium ; and
   - a voltage source connected to the one or more optical diffuser elements; and
- a controller operatively connected to the laser light source and the voltage source, wherein the controller is operable to apply and remove a driving voltage (Vd) to the one or more optical diffuser elements to toggle the one or more optical diffuser elements between a diffusing state and a non-diffusing state.

The first aspect of the present disclosure provides a system that offers several advantages in reducing laser speckle contrast. In this regard, the use of the one or more optical diffuser elements with the polymer-free cholesteric liquid crystal medium ensures efficient and controllable light scattering when in the diffusing state, effectively reducing the laser speckle. The integration of the voltage source and the controller allows precise control over when the one or more optical diffuser elements transition between the diffusing and non-diffusing states, providing flexibility in addressing varying illumination needs. This dynamic control synergistically works to optimize the balance between the laser speckle reduction and clarity, resulting in an effective reduction of laser speckle contrast while maintaining visibility and adaptability to different scenarios, making it a versatile solution in applications such as laser projection and imaging systems.

In a second aspect, the present disclosure provides a method of reducing laser speckle contrast, the method comprising:
- emitting a laser light towards an illumination target via one or more optical diffuser elements comprising a polymer free liquid crystal medium;
- applying and removing a driving voltage (Vd) to the one or more optical diffuser elements to toggle the one or more optical diffuser elements between a diffusing state and a non-diffusing state.

The second aspect of the present disclosure provides the method for effectively reducing the laser speckle contrast. The method introduces controlled scattering of light, which is crucial for speckle reduction, by emitting the laser light through the one or more optical diffuser elements with the polymer-free liquid crystal medium. The dynamic application and removal of the driving voltage to toggle the one or more diffuser elements between the diffusing and the non-diffusing states ensures adaptability to changing illumination needs and laser intensity. The aforementioned features work synergistically to provide a flexible and efficient method for reducing laser speckle contrast in various applications, such as laser projection and imaging systems. The method strikes a balance between speckle reduction and clarity, optimizing the visual experience while mitigating unwanted interference from speckle patterns.

Throughout the present disclosure, the term *"laser speckle"* as used herein refers to the random and granular interference pattern that appears when coherent laser light interacts with a rough or scattering surface. Typically, the laser speckle results in dynamic, granular pattern of light and dark regions, creating a distinctive and often unwanted visual effect. The term *"laser speckle contrast"* as used herein refers to a quantitative measure used to characterize the degree of contrast in the laser speckle pattern. Typically, the laser speckle contrast assesses the variations in the light intensity and provides a numerical value that indicates the granularity of the interference pattern of the laser speckle.

The term *"laser light"* as used herein refers to a specific form of electromagnetic radiation characterized by its coherence, meaning that the light waves are in phase with each other. Moreover, the laser light possesses a monochromatic nature. The term *"laser light source"* as used herein refers to an apparatus designed to generate and emit the laser light. Typically, the laser light source produces the laser light through the process of stimulated emission in a laser medium of the laser light source. The system comprises the laser light source having the laser medium that raises atoms or molecules to higher energy states. The aforementioned step creates population inversion, a key condition for the laser action. Moreover, placed within a resonant cavity with mirrors at both ends, the process of stimulated emission multiplies photons with the same wavelength and phase. The partially reflective mirror allows a portion of the coherent and directional laser light to exit, producing a highly focused and narrow beam of the laser light.

The term *"illumination target"* as used herein refers to a designated surface, object, or area within the system that is intentionally positioned to receive the laser light emitted by the laser light source. The illumination target serves as a focal point for the laser light's output. The technical effect of employing the illumination target is to ensure that the laser light is concentrated and utilized effectively for its intended application. By directing the laser light to the illumination target, the system can achieve the desired outcomes, such as reducing laser speckle contrast, as the laser light interacts with the target.

The term *"speckle reducer"* as used herein refers to a device or component that is used to modify the laser light's properties, resulting in a more uniform and less speckled illumination pattern. The speckle reducer includes the one or more optical diffuser elements and the voltage sources to achieve the speckle reduction effect. The term *"optical path"* as used herein refers to a route or trajectory that light follows within the system. Notably, the optical path encompasses all optical elements, components, and surfaces that the laser light encounters as it travels from the source to the illumination target. The optical path is crucial for controlling and directing the propagation of light within the system.

The term *"optical diffuser elements"* as used herein refers to components within the speckle reducer that are responsible for scattering and modifying the laser light. Optionally, the system comprises one or more optical diffuser elements. Optionally, the optical diffuser element comprises the polymer-free cholesteric liquid crystal medium and are designed to alter the laser light's behavior. The term *"polymer-free cholesteric liquid crystal medium"* as used herein refers to a material with liquid crystal properties that exhibits cholesteric texture. Notably, the polymer-free cholesteric liquid crystal medium is free of intentionally added polymer stabilizing networks. The polymer-free cholesteric liquid crystal medium can switch between a diffusing state (scattering laser light) and a non-diffusing state (allowing laser light to pass through) when subjected to an applied voltage, contributing to the speckle reduction.

Moreover, in a time-sequential set of events a given diffuser element changes its internal configuration (namely, a domain structure), which impacts local phase differences of the transmitted light beam. Thus, when integrating over time (integrating by eye, for example), multiple different speckle patterns average out and reduce the laser speckle contrast.

Furthermore, switching to transparent state is needed to reset the given diffuser element. Additionally, when the given diffuser element is nulled (such as in the transparent state) each time, the given diffuser element will collapse slightly differently to the diffusing state, thus introducing variability in the internal structure. Advantageously, this is achieved electronically (without the need of any moving parts) and the given diffuser element (despeckler) can be compact in size.

Optionally, a thickness of the polymer free cholesteric liquid crystal medium is from 2 up to 7 micrometers. Optionally, the thickness is in a range of 2 µm, 2.2 µm, 2.4 µm, 2.6 µm, 2.8 µm, 3.0 µm, 3.2 µm, 3.4 µm, 3.6 µm, 3.8 µm, 4.0 µm, 4.2 µm, 4.4 µm, 4.6 µm, 5.0 µm, 5.2 µm, 5.4 µm, 5.6 µm, 6.0 µm, 6.2 µm, 6.4 µm, 6.6 µm, or 6.8 µm up to 2.2 µm, 2.4 µm, 2.6 µm, 2.8 µm, 3.0 µm, 3.2 µm, 3.4 µm, 3.6 µm, 3.8 µm, 4.0 µm, 4.2 µm, 4.4 µm, 4.6 µm, 5.0 µm, 5.2 µm, 5.4 µm, 5.6 µm, 6.0 µm, 6.2 µm, 6.4 µm, 6.6 µm, 6.8 µm or 7.0 µm. It will be appreciated that by adjusting the thickness of the cholesteric liquid crystal medium within the specified range, it is possible to control the amount of scattering and achieve the desired level of speckle reduction while still preserving the beam's characteristics, making it a versatile solution for various optical systems.

Optionally, the polymer free cholesteric liquid crystal medium is free of polymer stabilizing networks and comprises a homeotropic alignment. The term *"homeotropic alignment"* as used herein refers to the orientation of the cholesteric liquid crystal molecules within the cell, where the cholesteric liquid crystal molecules are aligned in a vertical or perpendicular direction to the surfaces of the cell. The homeotropic alignment results in an optically transparent state. The polymer-free cholesteric liquid crystal medium is prepared without the intentional addition of polymer stabilizing networks. It is then sandwiched between two optically transparent substrates, which are transparent bounding substrates, with conductive electrode layers and dielectric isolating layers. Herein, the first transparent bounding substrates are optically transparent substrates with dielectric properties, optionally, an optical glass or a plastic. The homeotropic alignment of the cholesteric liquid crystal medium molecules is achieved in a homeotropic or substantially homeotropic manner, which means they are oriented vertically or nearly vertically to the surfaces of the cell. This alignment, combined with the absence of polymer stabilizing networks, allows the liquid crystal medium to smoothly transition between optical states, including the desired optically transparent state and a focal-conic state with light-scattering properties.

The term *"voltage source"* as used herein refers to an electrical component that provides a controlled electrical potential or voltage to the one or more optical diffuser elements. The term *"controller"* as used herein refers to a software and/or hardware in the system that is operable to implement specific algorithms therein. In this regard, the controller is operatively connected to both the laser light source and the voltage source. Optionally, the controller employs a processor configured to apply and remove a driving voltage (Vd) to the one or more optical diffuser elements. It will be appreciated that optionally the processor includes, but is not limited to, a microprocessor, a microcontroller, a complex instruction set computing (CISC) microprocessor, a reduced instruction set computer (RISC) microprocessor, a very long instruction word (VLIW) microprocessor, or any other type of processing circuit. Furthermore, the term "processor" may refer to one or more individual processors, processing devices and various elements associated with the controller.

Additionally, the one or more individual processors, processing devices and elements are arranged in various architectures for responding to and processing the instructions that drive the system.

The term *"driving voltage"* (Vd) as used herein refers to an electrical potential applied to the one or more optical diffuser elements in the system. In this regard, the driving voltage serves to control the optical state of the one or more diffuser elements, either inducing the diffusing state or the non-diffusing state. The magnitude and timing of the voltage signal determine the optical characteristics of the one or more diffuser elements, affecting the scattering or transmission of the laser light, thus influencing the reduction of the laser speckle contrast.

The term *"diffusing state"* as used herein refers to the optical configuration of the one or more optical diffuser elements in the system when the driving voltage is removed (absence of electric field). In the diffusing state, the one or more optical diffuser elements exhibit a scattering effect on the laser light passing therethrough, thereby causing the laser light to be slightly diverted from the incident direction. In this regard, the diffusing nature occurs due to differently oriented domains, which have differently oriented (in respect to incident light) index of refraction. For example, different diffuser configurations introduce different phase lag for a particular light (namely, photon), thereby influencing the interference pattern on the illumination target. The diffusing state is characterized by increased light scattering and reduced spatial coherence, contributing to the reduction of the laser speckle contrast. The term *"non-diffusing state"* as used herein refers to the optical configuration of the optical diffuser elements when the driving voltage is applied. The non-diffusing state is a transparent state. In the non-diffusing state, the one or more optical diffuser elements allow the laser light to pass therethrough with minimal scattering, preserving the coherence of the light beam. The technical benefit for the transparent state is to reset the diffusing state to obtain a new and different internal configuration, when the given diffuser element falls back into the diffusing state. Thus, the internal microstructure of the liquid crystal medium could be manipulated by toggling it from one state to another. As the diffusing state is characterized by domain structure there can be unlimited number of configurations possible but to engage them each time, the transparent state is required which resets the memory and allows the liquid crystal to collapse to another microstructural state (diffusing). In the transparent state there is no domain structure and thus the alignment in respect to incident light is uniform. The diffusing state enables modulation of the laser speckle pattern and an appearance thereof. Moreover, the despeckling occurs only over longer time when several different speckle patterns are accumulated (integrated) over an illumination target.

In this regard, when in operation, the control over the driving voltage enables the manipulation of the polymer-free cholesteric liquid crystal medium's optical properties. By applying the driving voltage, the polymer-free cholesteric liquid crystal medium within the one or more optical diffuser elements can be driven to change its optical state, transitioning between the diffusing and the non-diffusing conditions. The voltage source is connected to the one or more optical diffuser elements to deliver the necessary electrical signals. This, in turn, affects the optical properties of the polymer-free cholesteric liquid crystal medium within the one or more optical diffuser elements, causing the laser light to be scattered or not, depending on the driving voltage applied.

The term *"toggle"* as used herein refers to the action of switching back and forth between two states or conditions in a repeated manner. In this regard, the toggle (namely, toggling) is the process of switching the one or more optical diffuser elements between the diffusing state and the non-diffusing state thereof and in a repetitive sequence. The controller is configured to send the appropriate voltage signals to the one or more optical diffuser elements. When the controller applies the driving voltage (Vd), it enables the one or more optical diffuser elements to switch to the non-diffusing state. When the controller removes the driving voltage, it transitions the one or more optical diffuser elements to the diffusing state, allowing the laser light to pass through with reduced laser speckle contrast. This controlled toggling operation effectively reduces the laser speckle contrast in the emitted laser light. Moreover, as an effect of integration over time due to each time the given diffuser element goes through a transition from diffusing to transparent and back to diffusing state, a microstructure of the given diffuser element changes and the internal domain structure forms differently. Furthermore, each unique domain configuration corresponds to a unique speckle pattern. Additionally, the despeckling occurs as integration of many unique and effectively random laser speckle patterns which by averaging reduce the laser speckle contrast.

Optionally, the one or more optical diffuser elements comprises
- a first optical diffuser element and a second optical diffuser element on the optical path between the laser light source and the illumination target; and
wherein the controller element is operable to toggle the first optical diffuser element and the second optical diffuser element between the diffusing state and the non-diffusing state in a sequential manner independently from each other.

In this regard, the speckle reducer in the system comprises two distinct optical diffuser elements, referred to as the first optical diffuser element and the second optical diffuser element, both situated along the optical path between the laser light source and the illumination target. Advantageously, the use of two separate optical diffuser elements allows for greater flexibility in controlling the laser speckle reduction. Each of the first optical diffuser element and the second optical diffuser element can be individually controlled, offering precise adjustments to the laser light diffusion. Moreover, the first optical diffuser element and the second optical diffuser element are positioned in the sequential manner on the optical path. Optionally, the controller operates the first optical diffuser element and the second optical diffuser elements independently, toggling each of the first optical diffuser element and the second optical diffuser elements between the diffusing state and the non-diffusing state. The sequential control ensures that the laser light passes through one element at a time, contributing to the reduction of the laser speckle contrast. Optionally, the resulting switching pattern is a product of a software code.

For example, the controller may start by removing the driving voltage to the first optical diffuser element, causing it to enter the diffusing state, while keeping the second optical diffuser element in the non-diffusing state. After a specific time period or as per a predefined sequence, the controller is operable to reverse this process, toggling the first optical diffuser element back to the non-diffusing state and the second optical diffuser element into the diffusing state. The technical effect of said toggling is the enhanced ability to fine-tune the laser speckle reduction by independently controlling two optical diffuser elements, thereby achieving more effective laser speckle reduction in the laser beam that reaches the illumination target.

Optionally, the controller is operable to toggle:
- the first optical diffuser element between the diffusing state and the non-diffusing state in a first duty cycle; and
- the second optical diffuser element between the diffusing state and the non-diffusing state in a second duty cycle.

The term *"first duty cycle"* as used herein refers to the specific duration for which the first optical diffuser element remains in the diffusing state, followed by the duration the first optical diffuser element spends in the non-diffusing state. In other words, the first duty cycle refers to a parameter that defines the on-off pattern for the first optical diffuser element. Similarly, the term *"second duty cycle"* pertains to the time the second optical diffuser element spends in the diffusing state compared to the non-diffusing state. In other words, the second duty cycle refers to a different parameter that characterizes the on-off sequence for the second optical diffuser. In this regard, using different duty cycles such as the first duty cycle for the first optical diffuser element and the second duty cycle for the second optical diffuser element, enables the system to control and fine-tune the laser speckle reduction process. In an example, said flexibility allows the system for optimizing the laser speckle reduction performance in various applications where specific timing and intensity adjustments are required.

Optionally, the controller is operable to toggle the first duty cycle and the second duty cycle symmetrically. In this regard, the first duty cycle and the second duty cycle are toggled symmetrically by the controller to ensure that the switching of the first optical diffuser element and the second optical diffuser element between their diffusing state and the non-diffusing states is balanced and synchronized.

Optionally, by toggling symmetrically, the controller ensures that the first optical diffuser element and the second optical diffuser element alternate between their states in a balanced manner. For example, if the first optical diffuser element spends a certain amount of time in the diffusing state, the second optical diffuser element will also spend an equivalent amount of time in the diffusing state, maintaining the symmetrical pattern. Advantageously, the symmetrical toggling aims to ensure that the laser speckle reduction process is consistent and evenly distributed, leading to a more effective reduction of the laser speckle contrast.

Optionally, the controller is operable to apply and remove the driving voltage to synchronize the toggling of the first duty cycle and the second duty cycle such that
- a time difference between a falling edge of a first duty cycle driving signal and a rising edge of a second duty cycle driving signal, and
- a time difference between a falling edge of the second duty cycle driving signal and a rising edge of the first duty cycle driving signal are greater than a first period of time (tD+tF).

Herein, the time difference refers to the duration between two specific events or points in time, typically measured in microseconds or up to few milliseconds. The time difference quantifies how much time elapses between the occurrences of the events being compared. The term *"falling edge"* of the first duty cycle as used herein represents the point in time when the first duty cycle transitions from a high (active) state to a low (inactive) state. In other words, falling edge refers to the start of a period when the first duty cycle signal goes from an active to an inactive state. The term *"rising edge"* of the second duty cycle represents the point in time when the second duty cycle transitions from a low (inactive) state to a high (active) state. Here, the second duty cycle signifies the beginning of a period when the second duty cycle signal changes from an inactive to an active state. Herein, the time difference between the falling edge of the second duty cycle driving signal and the rising edge of the first duty cycle driving signal describes the time duration between the moment the second duty cycle signal becomes inactive (the falling edge) and the time when the first duty cycle driving signal becomes active (the rising edge). It quantifies the temporal gap or delay between the two signal transitions.

The technical effect of said synchronization is to ensure that the transitions between the first and second duty cycles are carefully timed with the specific delay. By controlling the timing of the transitions, the system enhances its despeckling performance. The deliberate delay between the falling edges and the rising edges of the duty cycle signals allows the one or more optical diffuser elements to remain in their desired diffusing state for an adequate duration, contributing to effective speckle reduction in the emitted laser light.

Optionally, the controller is further operable to toggle the first duty cycle and the second duty cycle in an antiphase. The term *"antiphase"* as used herein refers to a specific mode of operation where one or more optical diffuser elements, or the first duty cycle and the second duty cycle, are synchronized to act in opposite phases of their operation. For example, when the first optical diffuser element is in its diffusing state, the second optical diffuser element is transitioning from its diffusing state to its transparent state, and vice versa. In this regard, to achieve the antiphase operation, the controller is programmed to control the first optical diffuser element and the second optical diffuser element in such a way that when one is diffusing light, the other is in the process of becoming transparent. This synchronization helps ensure that there is a consistent and continuous diffusion of the laser light, improving the overall quality of the diffused output. Optionally, a duty cycle is a term typically attributed to a square-wave signal indicating for what duration the signal is high and for what duration the signal is low that is it is a ratio between these durations.

Optionally, the controller is further operable to apply and remove an overdrive voltage (Vod) to the one or more optical diffuser elements to toggle the one or more optical diffuser elements between a diffusing state and a non-diffusing state. The term *"overdrive voltage (Vod)"* as used herein refers to a voltage applied to the optical diffuser elements that exceeds the standard driving voltage (Vd) used to toggle the diffuser elements between the diffusing and non-diffusing states thereof. The overdrive voltage is applied for a short duration and at an elevated level compared to the regular driving voltage. Optionally, the controller is programmed to apply the overdrive voltage (Vod) for a short period, typically in the range of 100-200 microseconds, at a voltage level higher than the standard driving voltage (Vd). This brief burst of higher voltage helps the diffuser elements switch more quickly and efficiently, reducing the time they spend in the transitional state. The use of the overdrive voltage ensures that the one or more optical diffuser elements switch between their diffusing and non-diffusing states rapidly and consistently. This results in a more effective reduction of the laser speckle and a smoother diffusing process, contributing to the overall performance of the system.

Optionally, the polymer free cholesteric liquid crystal medium comprises homeotropic alignment texture in the non-diffusive state, and
focal-conic alignment texture in the diffusive state.

The term *"homeotropic alignment texture"* as used herein refers to the arrangement of liquid crystal molecules within the polymer free cholesteric liquid crystal medium in a way that the liquid crystal molecules are aligned perpendicular to the surfaces of transparent bounding substrates or planes of electrodes (which are typically parallel to each other). The homeotropic alignment texture is preferred when the polymer free cholesteric liquid crystal medium is in the non-diffusive state. In this regard, when the driving voltage or an electric field is applied, the polymer free cholesteric liquid crystal medium aligns itself homeotropically, allowing light to pass through with minimal disruption. This state is desirable when the system needs to transmit light without scattering. Technically the homeotropic alignment is performed to assist with the reset of the diffusing state's microdomain arrangement.

The term *"focal-conic alignment texture"* as used herein refers to the arrangement of liquid crystal molecules in a manner where they are organized in a random or pseudo-random fashion, forming a microdomain structure and resulting in light scattering. The focal-conic alignment texture is beneficial due to electronically reconfigurable microdomain structure, which directly affects appearance of the laser speckle patterns. The focal-conic alignment texture is associated to the diffusive state of the polymer free cholesteric liquid crystal medium. In this state, the liquid crystal molecules are deliberately configured to scatter light, contributing to the reduction of laser speckle. Optionally, the internal structure of the liquid crystal cell contains an alignment layer that is in contact with the liquid crystal medium. Depending on properties of this alignment layer liquid crystal molecules orient differently near this layer (at the boundaries). The homeotropic alignment achieved by use of a special polymer or inorganic coating with certain properties forces molecules (rod like formations) to stand vertically in the direction of the given surface's normal vector. The homeotropic state and the focal conic state are states in which liquid crystal is patterned. The homeotropic state is a transparent state, whereas the focal conic state is the diffusive state in which the light is scattered.

Optionally, when the electric field is removed, the polymer free cholesteric liquid crystal medium transitions to the focal-conic alignment texture. In this state, the polymer free cholesteric liquid crystal medium is randomly aligned, causing formation of domain structure and light to scatter as it passes through. This scattering effect helps reduce laser speckle, making the medium useful for applications that require diffusing or despeckling light.

Optionally, the controller is further operable to control the laser light source to adjust an illumination level of the emitted laser light in synchronisation of the diffusing state and non-diffusing state of the one or more optical diffuser elements. In this regard, the controller is operable to control the laser light source to adjust the illumination level of the laser light it emits. This adjustment is synchronized with the diffusing state and non-diffusing state of the one or more optical diffuser elements. In other words, the controller ensures that the intensity of the laser light matches the optical state of the one or more diffuser elements.

Optionally, when the one or more optical diffuser elements are in the diffusing state (scattering light), the controller increases the laser light source's illumination level to provide a brighter output. Conversely, when the one or more diffuser elements are in the non-diffusing state (transmitting light without scattering), the controller decreases the illumination level to reduce the laser light's intensity. This synchronization ensures that the emitted light is appropriate for the desired application without fluctuations in the intensity due to illumination.

The present disclosure also relates to the method of reducing laser speckle contrast as described above. Various embodiments and variants disclosed above, with respect to the aforementioned system of reducing laser speckle contrast, apply mutatis mutandis to the method of reducing laser speckle contrast.

It will be appreciated that the method is used to decrease the laser speckle contrast by emitting the laser light directed at the illumination target through the one or more optical diffuser elements. The one or more optical diffuser elements incorporate the polymer free liquid crystal medium.

Moreover, the method comprises applying and removing the driving voltage (Vd) to the one or more optical diffuser elements to toggle the one or more optical diffuser elements between the diffusing state and the non-diffusing state. Beneficially, the toggling provides controlled manipulation of the polymer-free liquid crystal medium's alignment. In this regard, when the driving voltage is applied, the polymer-free liquid crystal aligns homeotropically, resulting in a transparent or the non-diffusing state. Conversely, when the driving voltage is removed, the polymer-free liquid crystal transitions to a focal-conic state with randomly aligned domains, leading to light scattering and the diffusing state. Beneficially, the toggling enables generation of time-sequential variations of the laser speckle patterns, which average out and mitigate the laser speckle contrast in a time domain. The dynamic toggling mechanism allows for the precise control over the diffuser elements, optimized design of the one or more optical diffuser element, enabling the reduction of laser speckle contrast by introducing controlled variations in the scattering pattern, thus improving the visual quality of the projected or illuminated laser light.

Optionally, the one or more optical diffuser elements comprises a first optical diffuser element and a second optical diffuser element, and the method comprises toggling the first optical diffuser element and the second optical diffuser element between the diffusing state and the non-diffusing state in a sequential manner independently from each other.

In this regard, the method employs the first optical diffuser element and the second optical diffuser element. It will be appreciated that the first optical diffuser element and the second optical diffuser element are strategically positioned along the optical path between the laser light source and the illumination target. The use of two separate optical diffuser elements provides enhanced flexibility for controlling laser speckle reduction.

Optionally, each of the first optical diffuser element and the second optical diffuser element is individually controllable, allowing for precise adjustments in the diffusion of the laser light. The sequential arrangement of the first optical diffuser element and the second optical diffuser element along the optical path ensures that laser light passes through one element at a time.

Advantageously, the sequential control ensures that each of the first diffuser element and the second diffuser element can be in the desired state at the right time, contributing to an effective reduction of the laser speckle contrast. The method enhances the adaptability and efficiency of the laser speckle reduction method, leading to improved image quality and visibility in various applications.

Optionally, the method further comprises
- toggling the first optical diffuser element between the diffusing state and the non-diffusing state in a first duty cycle; and
- toggling the second optical diffuser element between the diffusing state and the non-diffusing state in a second duty cycle.

In this regard, during the first duty cycle, the first optical diffuser element is toggled between the diffusing state and the non-diffusing states. This involves removing the driving voltage to induce diffusion and subsequently applying the driving voltage to return to the non-diffusing state. Optionally, the method comprises toggling the second optical diffuser element between the diffusing state and the non-diffusing state in the second duty cycle. It will be appreciated that the method, through the allocation of the first duty cycle and the second duty cycle to each of the optical diffuser elements, facilitates independent control over the diffusion characteristics of both the first optical diffuser element and the second optical diffuser element. This precise temporal control capability enables nuanced adjustments within the laser speckle reduction process. The method enhances operational flexibility in mitigating laser speckle contrast by affording independent customization of diffusing periods for each of the optical diffuser element. This adaptability proves valuable in accommodating diverse application requirements, thereby optimizing the laser speckle reduction process to suit specific operational contexts.

Optionally, the first duty cycle and the second duty cycle are symmetrical. In this regard, the method incorporates the first duty cycle and the second duty cycle that are symmetrical, meaning that the durations and timing patterns for toggling the first optical diffuser element and the second optical diffuser element between the diffusing state and the non-diffusing state are balanced and mirror each other. The technical advantage of employing symmetrical duty cycles lies in the synchronized and uniform operation of the first optical diffuser element and the second optical diffuser elements, leading to enhanced method stability, reduced complexity, and potentially improved visual appeal in the laser speckle reduction applications.

Optionally, the method further comprises synchronizing the toggling of the first duty cycle and the second duty cycle by applying and removing voltage such that
- a time difference between a falling edge of a first duty cycle driving signal and a rising edge of a second duty cycle driving signal, and
- a time difference between a falling edge of the second duty cycle driving signal and a rising edge of the first duty cycle driving signal are greater than a first period of time (tD+tF).

In this regard, the method allows synchronizing the toggling of the first duty cycle and the second duty cycle by applying and removing the driving voltage. The synchronization involves managing the timing relationships between the falling edge of the first duty cycle driving signal and the rising edge of the second duty cycle driving signal, as well as between the falling edge of the second duty cycle driving signal and the rising edge of the first duty cycle driving signal. Specifically, the time differences between the aforementioned edges are set to be greater than the first period of time (tD + tF). The technical effect of synchronizing the toggling of the first duty cycle and the second duty cycle with specified time differences is the prevention of optimized speckle reduction patterns in the laser speckle reduction.

Optionally, the first duty cycle and the second duty cycle are toggled in an antiphase. In this regard, the method enables toggling of the first duty cycle and the second duty cycle in the antiphase manner. In this configuration, the diffusing state and the non-diffusing state of the first optical diffuser element are inversely correlated with those of the second optical diffuser element. Moreover, the technical effect of toggling the first duty cycle and the second duty cycle in the antiphase manner includes maximized temporal separation, complete cycle symmetry, minimized interference, enhanced speckle reduction uniformity, and optimized energy consumption, when in operation.

It will be appreciated that when in the antiphase i.e., when one or more optical diffuser element is in the diffusing state, the other is initiated to transition from its diffusing state to the transparent state. In such configuration, the diffusion angle is substantially constant. The switching period is balanced. The suggested optimum inverse values representing the switching frequency are at least 60 Hz. Nonetheless, preferred switching frequency should be kept as high as possible (ideally in the 120 to 240 Hz range). The compromise in choosing the switching frequency is made based on the transition period tF and tR in the optical switching of the one or more optical diffuser elements. The ratio of tF+tR to period the given diffuser element is kept in the FC state (tFC) shouldn't surpass "1". Ideally, if the ratio (tF+tR)/tFC ≤ 0.5 that is, to ensure meaningful diffusion duration and leveraging of different domain configuration in the mitigation of the laser speckle contrast. As tR is directly dependent on the surface area of the one or more optical diffuser element and the driving voltage, in many applications it can be tuned to be small. Conservatively, the optimum achievable switching frequency with the given diffuser technology is around 380 Hz. That is for a single diffuser. Optionally, stacking the one or more optical diffuser elements effectively multiplies number of different configurations of internal domain structure and thus facilitate better despeckling performance. Optionally, some use cases might require an even higher degree of despeckling quality, requiring more than two stacked optical diffuser elements. Optionally, to accommodate predictable performance in terms of average, maximum and minimums direct transparency as well as diffusion angle, the duty cycle of each "channel" (meaning in the signal of optical switching response) is tuned to allow leveraging the maximum despeckling potential from the given arrangement. Nonetheless, when tuning the duty cycle (such as the first duty cycle or the second duty cycle), individual switching frequency and driving waveform is tuned to follow the rule of (tF+tR)/tFC ≤ 0.5.

Optionally, the method further comprises applying and removing an overdrive voltage (Vod) to the one or more optical diffuser elements to toggle the one or more optical diffuser elements between a diffusing state and a non-diffusing state. The method comprises the application and removal of the overdrive voltage (Vod) to the one or more optical diffuser elements in addition to the driving voltage. The overdrive voltage facilitates the toggling of the one or more optical diffuser elements between the diffusing state and the non-diffusing state. The technical effect of applying and removing the overdrive voltage lies in the enhanced response time, precise control, and optimized laser speckle reduction performance.

Optionally, the method further comprises adjusting an illumination level of the emitted laser light in synchronisation of the diffusing state and non-diffusing state of the one or more optical diffuser elements. In this regard, the technical effect of adjusting the illumination level of the emitted laser light in synchronization with the diffusing state and non-diffusing state of the one or more optical diffuser elements is to enhance the efficiency of the laser speckle reduction method. It will be appreciated that by coordinating the adjustment of the illumination level with the diffusing state and non-diffusing state, the method can optimize the visual appearance and quality of the projected or illuminated laser light. Optionally, during the diffusing state adjusting the illumination level can help control the overall brightness and visibility of the diffused light. Optionally, during the non-diffusing state adjusting the illumination level ensures that the clear, non-scattered light maintains a desired brightness or remains in substantially similar brightness as during the light-diffusing phase of the speckling cycle. This synchronization allows for dynamic control of the perceived intensity, contrast, and visibility of the laser light, contributing to an improved and visually appealing output.

### EXPERIMENTAL PART

The disclosed system was implemented in multiple domains where laser-light is used, including various measurement devices; imaging systems reliant upon laser-based illumination and image projection systems; large cinematic systems; as well as miniature projection units such as head-mounted displays and smart glasses.

### DETAILED DESCRIPTION OF THE DRAWINGS

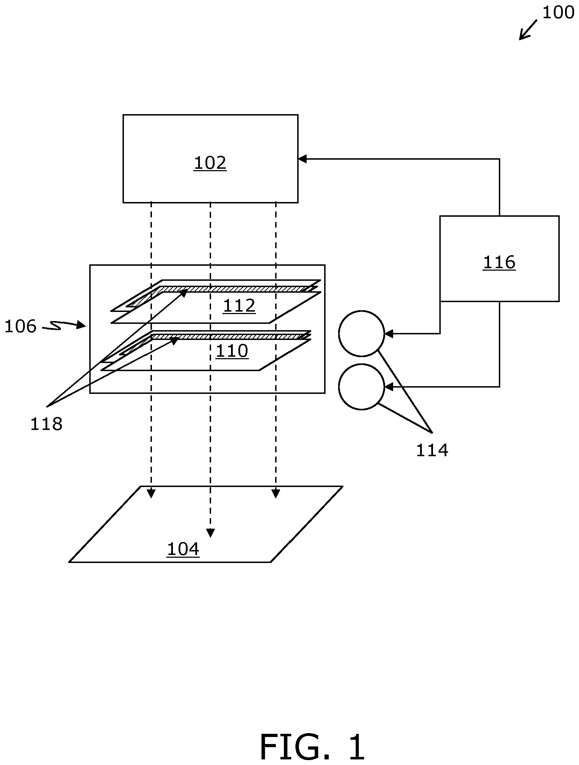

Referring to FIG. 1, illustrated is a system **100** of reducing laser speckle contrast, in accordance with an embodiment of the present disclosure. As shown, the system **100** comprises a laser light source **102** arranged to emit laser light (depicted as dotted arrows emanating from the laser light source **102);** an illumination target **104** arranged to receive the emitted laser light; a speckle reducer **106** on an optical path between the laser light source **102** and the illumination target **104.** The speckle reducer **106** comprises one or more optical diffuser elements, such as a first optical diffuser element **110** and a second optical diffuser element **112,** comprising a polymer free cholesteric liquid crystal medium **118;** and a voltage source **114** connected to the one or more optical diffuser elements **110, 112.** Moreover, the system comprises a controller **116** operatively connected to the laser light source **102** and the voltage source **114,** wherein the controller **116** is operable to apply and remove a driving voltage (Vd) to the one or more optical diffuser elements **110, 112** to toggle the one or more optical diffuser elements **110, 112** between a diffusing state and a non-diffusing state.

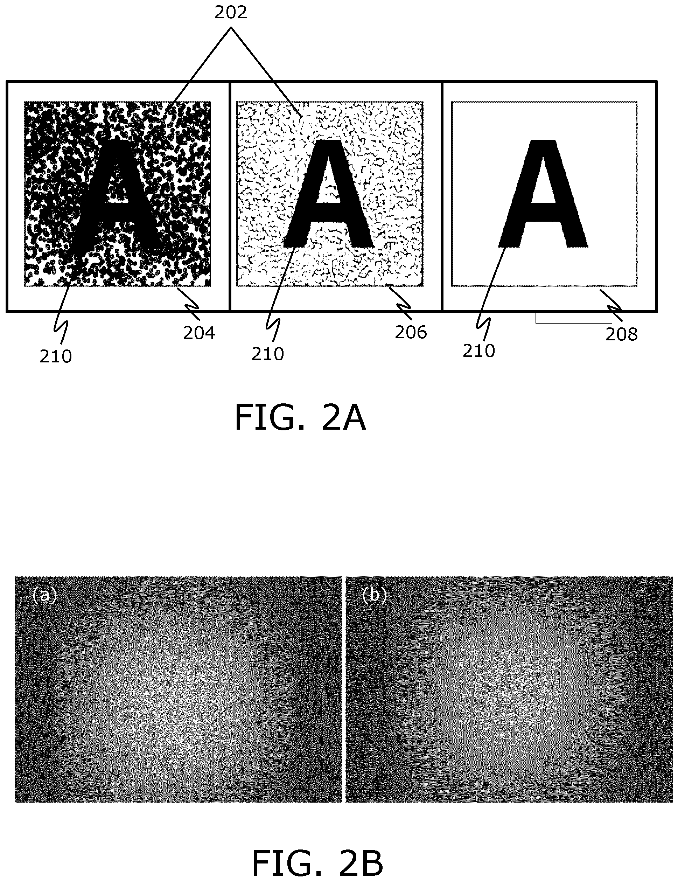

Referring to FIG. 2A, illustrated is a representation of laser speckles **202** on images **204, 206** and **208,** in accordance with an embodiment of the present disclosure. Herein, the image **204** with unmitigated tiny details of a laser speckle **202** is unperceivable to view an object, namely A, **210** in the image **204.** Moreover, the image **206** mitigates laser speckle **202** using the aforementioned system **100** of FIG. 1, and is at least partially perceivable to view the object **210** in the image **206.** Furthermore, the image **208** with no visible laser speckle **202** is a ground-level ideal image. As shown, as compared to the image **208,** small details of the image **204** and **206** are unrecoverably lost (not-perceived).

Referring to FIG. 2B, illustrated is a representation of laser speckles pattern contrast reduction, in accordance with an embodiment of the present disclosure. In this regard, Panel A depicts an illumination target illuminated by a 532 nm diode laser through a switching diffuser in a transparent state (namely, the non-diffusing state), which is kept transparent all the time - effectively corresponding to no speckle-reduction condition. In Panel B, the same given diffuser is switched to a state in which it changed between the diffusing state and the transparent state with a duty cycle of >90% and frequency of 60 Hz - corresponding to laser speckle mitigation condition. Panel A shows the laser speckle pattern on a diffusing screen as the laser light is transmitted directly without means of speckle mitigation. The Panel B shows laser speckle pattern (illumination beam) reflected of the same diffusing screen, when it is transmitted through activated speckle reducer driven in a single-channel mode. In Panel B, only a single optical diffuser element has been driven with 60Hz at a high duty cycle of 90% , thus demonstrating the reduction of the laser speckle contrast.

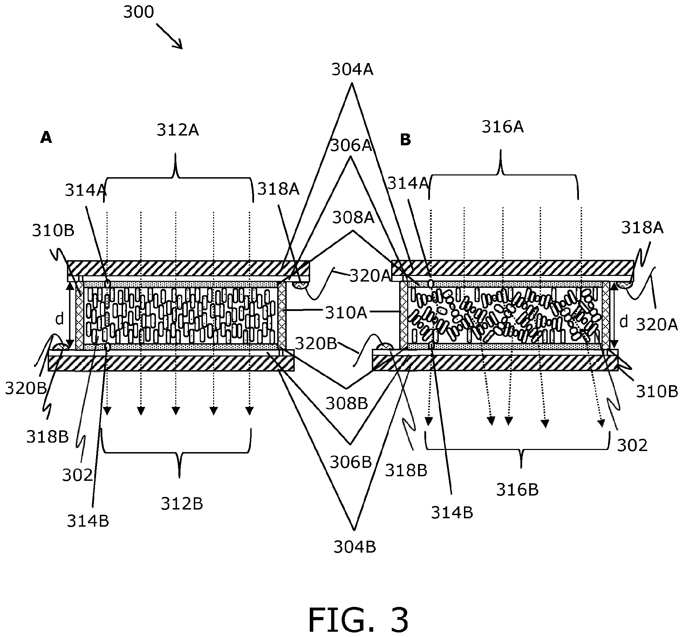

Referring to FIG. 3, illustrated is one or more optical diffuser elements **300** in a diffusing state and a non-diffusing state, in accordance with an embodiment of the present disclosure. As mentioned before in FIG. 1, the one or more optical diffuser elements **300** comprise a polymer free cholesteric liquid crystal medium **302.** As shown in image **A,** in the transparent state (i.e., energized or field-on state), the polymer free cholesteric liquid crystal medium **302** is homeotropically aligned. As shown in image **B,** in the diffusing state (i.e., unenergized or field-off state), the polymer free cholesteric liquid crystal medium **302** has a focal conic texture with corresponding domain structure.

As shown, the one or more optical diffuser elements **300** comprises a first transparent bounding substrate **304A** and a second transparent bounding substrate **304B,** which are coated with a transparent conductive electrode layer **306A** and **306B** on top of which a dielectric isolating layer **308A** and **308B** with homeotropic or substantially homeotropic alignment properties is deposited. Herein, the first transparent bounding substrate **304A** and the second transparent bounding substrate **304B** are optically transparent substrates with dielectric properties, optionally, an optical glass or a plastic. The one or more optical diffuser elements **300** is sealed around its perimeter by a polymer seal **310A** and **310B.** As shown, the geometry of the one or more optical diffuser elements **300** and corresponding polymer seal **310A** and **310B** is rectangular. An active medium, namely, polymer free cholesteric liquid crystal medium **302** is disposed in between the corresponding first transparent bounding substrate **304A** and the second transparent bounding substrate **304B** stacks.

Moreover, images **A** and **B** show principle of collimated light going through the one or more optical diffuser elements **300** when it is in its homeotropic (transparent) state and focal-conic state with distinct light-scattering domain structure.

As shown in image **A,** upon application of electric field across two electrodes the polymer free cholesteric liquid crystal medium **302** aligns homeotropically (or substantially homeotropically), which is an optically transparent state. In the homeotropic state, corresponding light rays **312B** are transmitted through the one or more optical diffuser elements **300** without scattering within the polymer free cholesteric liquid crystal medium **302.** Thus, their corresponding optical lengths within the polymer free cholesteric liquid crystal medium **302** are equal and given homogeneous nature of the polymer free cholesteric liquid crystal medium **302** in homeotropic state in regards to incident light rays **312A,** i.e., no phase difference for each of the light ray **312B** is achieved. In the homeotropic state, the optical path length (from a point **314A** to **314B)** within the polymer free cholesteric liquid crystal medium **302** is substantially equal to its thickness ***d***. Thus, in homeotropic state the optical diffuser elements **300** doesn't have despeckling properties. Optionally, if the optical diffuser elements **300** doesn't have despeckling properties when the optical diffuser elements **300** is in the diffusing state without switching. As switching includes the modulation of internal structure, thus leading to the modulation of the laser speckle pattern's appearance.

As shown in image **B,** upon no field conditions, the polymer free cholesteric liquid crystal medium **302** transitions to its focal-conic state with domain structure, characterized by randomly or pseudo randomly aligned polymer free cholesteric liquid crystal medium **302** and thus having light scattering properties. When the optical state is changed to the focal-conic state, the corresponding light rays **316B** are scattered within the polymer free cholesteric liquid crystal medium **302** and their optical path lengths extend beyond the thickness ***d*** of the polymer free cholesteric liquid crystal medium **302.** Furthermore, due to randomly aligned polymer free cholesteric liquid crystal medium **302** with anisotropic properties in respect to incident light rays **316A,** internal refraction takes place and each of the light rays **316B** has a different optical path length (from a point **314A** to **314B)** within the polymer free cholesteric liquid crystal medium **302.** Thus, upon exiting the optical diffuser element **300,** each light ray **316B** has accumulated a different phase lag manifesting as a spatial coherence reduction. From a different perspective it can be looked as each of the differently oriented polymer free cholesteric liquid crystal medium **302** in the focal-conic state has a slightly different index of refraction in respect to incident light **314A** and thus locally when each part of the incident light **314A** goes through the polymer free cholesteric liquid crystal medium **302** its path encounters different configurations of the polymer free cholesteric liquid crystal medium **302** and corresponding indices of refraction, which means that the light ray **314B** locally slows down differently thus accumulating a phase lag and partially disrupting the spatial coherence. For example, the light ray at the output has some coherence and will produce an interference pattern manifesting as laser speckling. Moreover, in a time-sequential manner the path lengths can be manipulated thus the internal configuration changes and with it changes the appearance of the laser speckle pattern. In such a case, for example, when 20 laser speckle patterns are accumulated in a short time they will average out to an extent and the illumination area (target) will look more uniform - reducing speckle contrast. Thinking in analogies, instead of rotating a ground diffuser the same effect is achieved electronically - without any moving parts.

Externally, electrodes are connected *via* attachment pads (or bus-bars) **318A** and **318B.** Further wires or other conductors **320A** and **320B** are attached to the attachment pads **318A** and **318B** to ensure external connection to a voltage source for energizing and inducing an electric field across the polymer free cholesteric liquid crystal medium **302.**

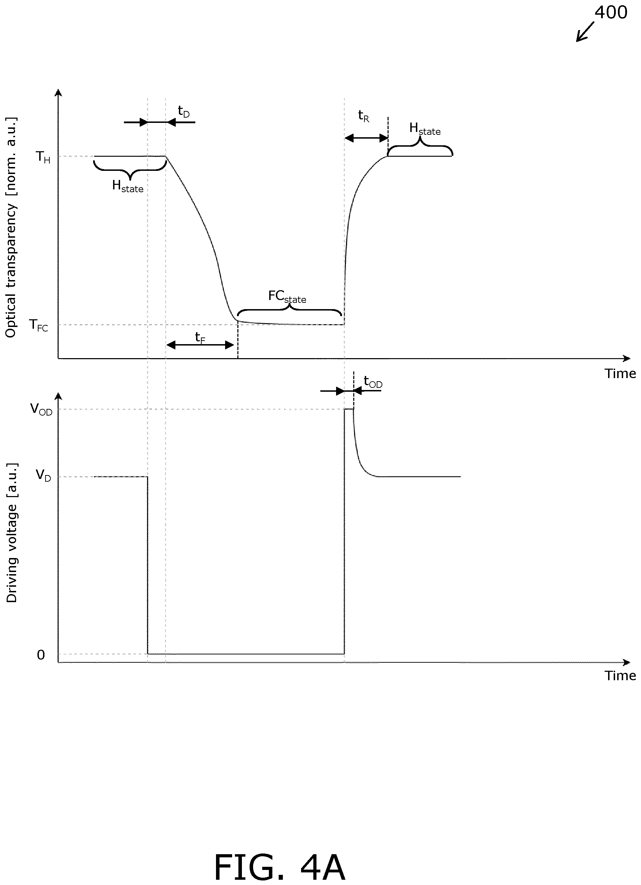

Referring to FIG. 4A, illustrated is a graphical representation **400** of a switching cycle of one or more optical diffuser element, in accordance with an embodiment of the present disclosure. As shown, the upper panel demonstrates direct optical transmission signal and the lower panel shows the corresponding applied voltage signal.

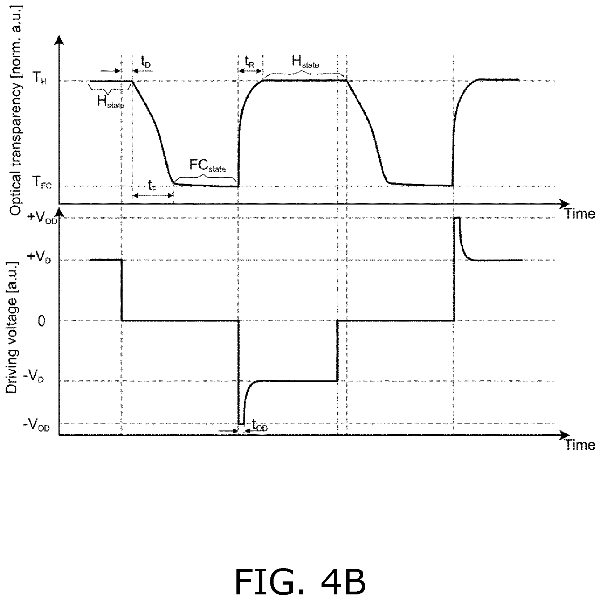

As mentioned above, the one or more optical diffuser element switches optical states such as a diffusing state and a non-diffusing state upon removal or application of driving voltage, respectively. As shown in FIG.4, at an applied driving voltage **V_{D},** creating an electric field intensity of 10-25MV/m, the polymer free cholesteric liquid crystal medium aligns homeotropically, **Hₛₜₐₜₑ** (optically transparent state). In contrast, upon removed voltage, **0V** (no external electric field) the polymer free cholesteric liquid crystal medium undergoes transition to a focal conic state **FCₛₜₐₜₑ** characterized by low direct optical transmission due to light scattering or diffusion. The transition between optical states **Hₛₜₐₜₑ** and **FCₛₜₐₜₑ** are governed by the voltage signal applied across two of the electrodes of the optical diffuser element.

It may be appreciated from the FIG. 4A, that while the voltage signal itself has steep edges, the optical response doesn't exactly follow the voltage signal due to inherent capacitance and stored energy within the internal electric field of the polymer free cholesteric liquid crystal medium. When the one or more optical diffuser elements is energized and it is in its homeotropic state **Hₛₜₐₜₑ** an abrupt removal of the drive voltage is induced, as shown in the lower panel, for a time **t_{D}** the optical diffuser remains within the **Hₛₜₐₜₑ.** After this period, which typically is in the range of 50-250 microseconds, the polymer free cholesteric liquid crystal medium starts a decay form a **Hₛₜₐₜₑ** to the **FCₛₜₐₜₑ.** The duration of the decay process or the fall time **t_{F}** is determined by properties of the polymer free cholesteric liquid crystal medium **302,** as well as temperature and is typically in a range of 400 - 800 microseconds. Moreover, the transition from the **FCₛₜₐₜₑ** to **Hₛₜₐₜₑ** occurs almost immediately with the application of the drive voltage and its duration or the rise time **t_{R}** is determined by ambient conditions, composition of the polymer free cholesteric liquid crystal medium as well as applied voltage. Furthermore, the duration of **t_{R}** can be directly affected by the applied voltage - at higher voltages the **t_{R}** tends to decrease. Typically, it is on the order of 200-800 microseconds. It will be appreciated that the **Hₛₜₐₜₑ** and **FCₛₜₐₜₑ** form a repeating cycle thereof.

Referring to FIG. 4B, illustrated is a graphical representation **400** of a difference in direct optical transparency (or light transmission) between Hstate and FCstate, in accordance with an embodiment of the present disclosure. In other words, **Hₛₜₐₜₑ** and **FCₛₜₐₜₑ** are associated with a light intensity change between the **Hₛₜₐₜₑ** and **FCₛₜₐₜₑ.** Notably, with smaller diffuser cell-gaps, the differences between transparency in the **Hₛₜₐₜₑ** and **FCₛₜₐₜₑ** tend to shrink. Nonetheless, the difference is associated with the scattering of light. The small cell-gaps enable to achieve as small as possible diverting angle - thus to conserve the overall light intensity even after the system. Nonetheless, when the one or more optical diffuser element switches - it goes through **Hₛₜₐₜₑ,** i.e., meaning that "unfiltered" light which causes the laser speckle pattern passes through and causes an increase of the laser speckle pattern contrast. To mitigate this, the first optical diffuser element and the second optical diffuser element are switched in antiphase. Ideally if there is no leakage of "unfiltered" light, the frequency of switching for both the first optical diffuser element and the second optical diffuser elements can be identical - but the first duty cycle and the second duty cycle can vary to account for "no transparency gaps" condition. Herein, the upper panel possesses optical transparency, while the lower panel is driving voltage.

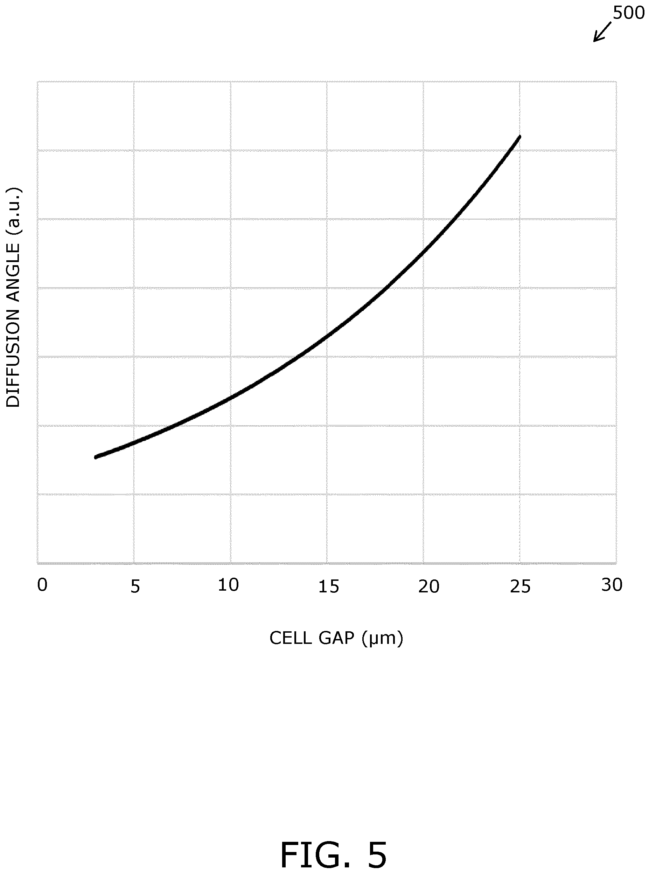

Referring to FIG. 5, illustrated is a graphical representation **500** of a change of diffusion angle as a function of cell gap, in accordance with an embodiment of the present disclosure. As shown, the diffusion (or scattering) angle is exponentially dependent on the cell gap (i.e., thickness of the polymer free cholesteric liquid crystal medium (depicted as ***d*** in FIG.3)). It may be appreciated from the FIG. 5, with larger thickness, there are more polymer free cholesteric liquid crystal medium on the path of the incident light and a greater possibility to deviate from the original direction, while at lower thickness values of the polymer free cholesteric liquid crystal medium scattering can be less efficient. Nonetheless, it must be noted that the near surface layers which are homeotropically aligned have an influence on the alignment of near-substrate layers of the polymer free cholesteric liquid crystal medium and at very low cell-gap values formation of focal-conic domain structure might be hindered. Thus, there is an optimum minimum threshold cell gap which is effective in the laser speckle removing (de-speckling) applications, such as where the cell gap value is in a range of 2-4 µm. Nonetheless, with thinner polymer free cholesteric liquid crystal medium there is a room for less configurational variation of domain structure than in a thicker polymer free cholesteric liquid crystal medium - thus the de-speckling effect is lower.

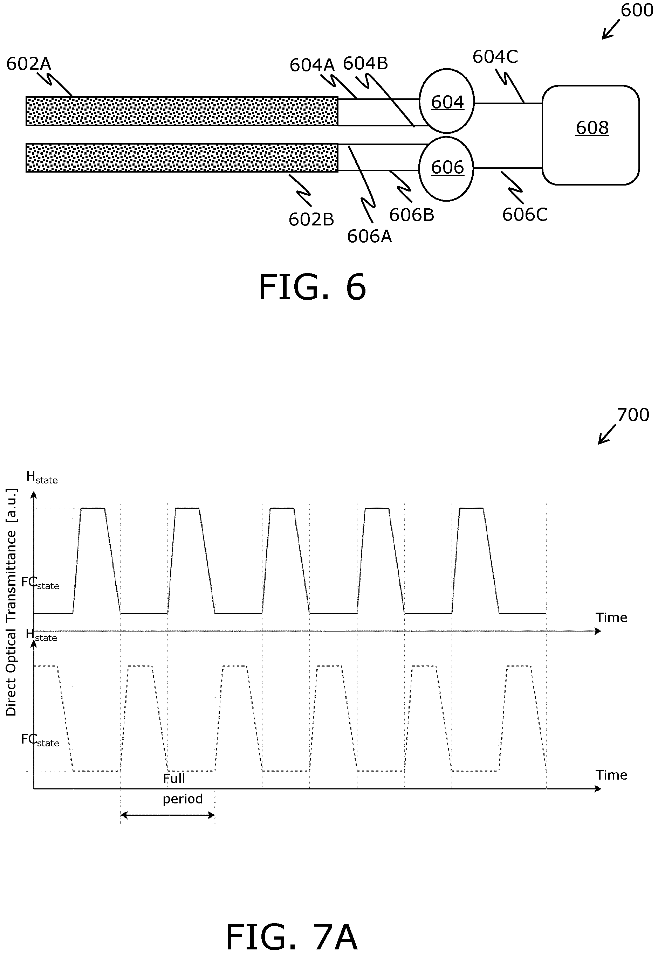

Referring to FIG. 6, illustrated is an arrangement **600** of two stacked optical diffuser elements **602A** and **602B** for reducing laser speckle contrast, in accordance with an embodiment of the present disclosure. As shown, the first optical diffuser element **602A** is stacked above the second optical diffuser element **602B.** The corresponding electric connections **604A** and **604B** and **606A** and **606B** are connected to voltage sources **604** and **606,** respectively. Moreover, the voltage sources **604** and **606** are communicably coupled through respective communications links **604C** and **606C** to a controller **608.** The controller **608** is an electronic block operating for supplying a control signal to the voltage sources **604** and **606** to orchestrate their consonant operation. The voltage sources **604** and **606** ensure the relatively high-voltage driving signal to the respective one or more optical diffuser elements **602A** and **602B.**

Referring to FIG. 7A, illustrated is a simulated oscillogram **700** of optical response of an optical diffuser element, in accordance with an embodiment of the present disclosure. As shown, the first and second optical diffuser element (depicted as **602A** and **602B** in FIG. 6) of the optical diffuser element function in an antiphase. In the antiphase configuration, when one of the two optical diffuser elements is in its diffusing state, the other optical diffuser element is initiated to transition from its diffusing state to the transparent state. It may be appreciated that in such configuration, the diffusion angle generally is kept substantially constant and the switching period (Full period) has to be balanced. Stacking the first and the second optical diffuser elements effectively multiplies number of different configurations of internal domain structure and thus facilitate better despeckling performance or reduction of the laser speckle contrast.

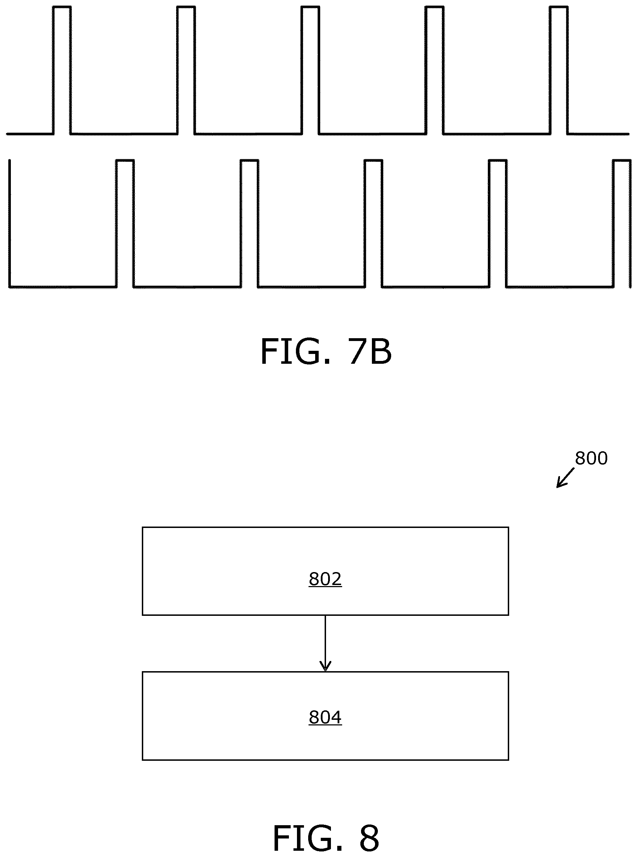

Referring to FIG. 7B, illustrated is a simulated oscillogram of optical response of two optical diffuser elements driven with equal frequencies, in accordance with an embodiment of the present disclosure. There is shown a "safe" operation, this is meant as an electrical voltage signal. Frequencies are equal but these square wave signals are shifted one against another such that produce an optical switching pattern quite similar to that of the aforementioned Fig.7A. To achieve such configuration, number of switching configurations per given time period are sacrificed - thus not achieving the most optimal descpeckling performance. In this regard, very long diffusive periods and very short transparent periods - which can be achieved only at low frequencies, are needed. If frequency is increased, then due to fall time and rise time, the duty cycle (such a first duty cycle or a second duty cycle) increases in a trivialized manner, and in such case it becomes hard to block out a condition wherein both of the diffuser elements are in transparent or transitional state.

Referring to FIG. 8, illustrated is a flowchart depicting steps of a method of reducing laser speckle contrast, in accordance with an embodiment of the present disclosure. At step **802,** a laser light is emitted towards an illumination target via one or more optical diffuser elements comprising a polymer free liquid crystal medium. At step **804,** a driving voltage (Vd) is applied and removed to the one or more optical diffuser elements to toggle the one or more optical diffuser elements between a diffusing state and a non-diffusing state.

## Claims

1. A system (100) of reducing laser speckle contrast, the system comprising:
- a laser light source (102) arranged to emit laser light;
- an illumination target (104) arranged to receive the emitted laser light;
- a speckle reducer (106) on an optical path between the laser light source and the illumination target, the speckle reducer comprising
- one or more optical diffuser elements (300) comprising a polymer free cholesteric liquid crystal medium (118, 302);
- a voltage source (114, 604, 606) connected to the one or more optical diffuser elements; and
- a controller (116, 608) operatively connected to the laser light source and the voltage source, wherein the controller is operable to apply and remove a driving voltage (Vd) to the one or more optical diffuser elements to toggle the one or more optical diffuser elements between a diffusing state and a non-diffusing state.

2. A system (100) according to claim 1, wherein
- the one or more optical diffuser elements (300) comprises
- a first optical diffuser element (110, 602A) and a second optical diffuser element (112, 602B) on the optical path between the laser light source (102) and the illumination target (104); and
wherein the controller (116, 608) element is operable to toggle the first optical diffuser element and the second optical diffuser element between the diffusing state and the non-diffusing state in a sequential manner independently from each other.

3. A system (100) according to claim 2, wherein the controller (116, 608) is operable to toggle:
- the first optical diffuser element (110, 04A, 602A) between the diffusing state and the non-diffusing state in a first duty cycle; and
- the second optical diffuser element (112, 602) between the diffusing state and the non-diffusing state in a second duty cycle.

4. A system (100) according to claim 3, wherein the controller (116, 608) is operable to toggle the first duty cycle and the second duty cycle symmetrically, and/or
the controller (116, 608) is further operable to toggle the first duty cycle and the second duty cycle in an antiphase..

5. A system (100) according to claims 3 or 4, wherein the controller (116, 608) is operable to apply and remove the driving voltage to synchronize the toggling of the first duty cycle and the second duty cycle such that
- a time difference between a falling edge of a first duty cycle driving signal and a rising edge of a second duty cycle driving signal, and
- a time difference between a falling edge of the second duty cycle driving signal and a rising edge of the first duty cycle driving signal
are greater than a first period of time (tD+tF).

6. A system (100) according to any of the preceding claims, wherein a thickness of the polymer free cholesteric liquid crystal medium (118, 302) is from 2 up to 7 micrometers.

7. A system (100) according to any of the preceding claims, wherein the polymer free cholesteric liquid crystal medium (118, 302) is free of polymer stabilizing networks and comprises a homeotropic alignment, and/or
the polymer free cholesteric liquid crystal medium (118, 302) comprises
homeotropic alignment texture in the non-diffusive state, and
focal-conic alignment texture in the diffusive state..

8. A system (100) according to any of the preceding claims, wherein the controller (116, 608) is further operable to apply and remove an overdrive voltage (Vod) to the one or more optical diffuser elements (300) to toggle the one or more optical diffuser elements between a diffusing state and a non-diffusing state.

9. A system (100) according to any of the preceding claims, wherein the controller (116, 608) is further operable to control the laser light source (102) to adjust an illumination level of the emitted laser light in synchronisation of the diffusing state and non-diffusing state of the one or more optical diffuser elements (300).

10. A method of reducing laser speckle contrast, the method comprising:
- emitting a laser light towards an illumination target via one or more optical diffuser elements (300) comprising a polymer free liquid crystal medium (118, 302); and
- applying and removing a driving voltage (Vd) to the one or more optical diffuser elements to toggle the one or more optical diffuser elements between a diffusing state and a non-diffusing state.

11. A method according to claim 10, wherein the one or more optical diffuser elements (300) comprises a first optical diffuser element (110, 602A) and a second optical diffuser element (112, 602B), and the method comprises
- toggling the first optical diffuser and the second optical diffuser between the diffusing state and the non-diffusing state in a sequential manner independently from each other, and/or
- toggling the first optical diffuser element (110, 602A) between the diffusing state and the non-diffusing state in a first duty cycle; and
- toggling the second optical diffuser element (112, 602B) between the diffusing state and the non-diffusing state in a second duty cycle.

12. A method according to claim 11, wherein the first duty cycle and the second duty cycle are symmetrical, and/or the first duty cycle and the second duty cycle are toggled in an antiphase.

13. A method according to claims 11 or 12 further comprising synchronizing the toggling of the first duty cycle and the second duty cycle by applying and removing voltage such that
- a time difference between a falling edge of a first duty cycle driving signal and a rising edge of a second duty cycle driving signal, and
- a time difference between a falling edge of the second duty cycle driving signal and a rising edge of the first duty cycle driving signal
are greater than a first period of time (tD+tF).

14. A method according to claims 10-13, further comprising applying and removing an overdrive voltage (Vod) to the one or more optical diffuser elements (300) to toggle the one or more optical diffuser elements between a diffusing state and a non-diffusing state.

15. A method according to claims 10-14, further comprising adjusting an illumination level of the emitted laser light in synchronization of the diffusing state and non-diffusing state of the one or more optical diffuser elements (300).
